# EUROPEAN PATENT APPLICATION

(11) **EP 4 625 124 A1**
(43) Date of publication of application: **01.10.2025**
(21) Application number: 24773845.3
(22) Date of filing: 21.02.2024
(51) Int. Cl.: G06F 3/041

(54) **POSITION SELECTION METHOD, ELECTRONIC DEVICE, AND COMPUTER-READABLE STORAGE MEDIUM**

(30) Priority: 20.03.2023 CN 202310295094
(71) Applicant: Huawei Technologies Co., Ltd., Shenzhen, Guangdong 518129 (CN)
(72) Inventor: CHEN, Hongtao, Shenzhen, Guangdong 518129 (CN); HAN, Yi, Shenzhen, Guangdong 518129 (CN)
(74) Representative: Körber, Martin Hans
(86) International application number: PCT/CN2024/077903
(87) International publication number: WO 2024/193277

(57) **Abstract**

This application is applicable to the field of terminal technologies, and in particular, relates to a location selection method, an electronic device, and a computer-readable storage medium. **In** the method, the electronic device may display a preset track line on a display, and display a first location point on the preset track line in a first display area of the display. When a user wants to select a second location point, the user may perform a first operation on a rotatable component, where the second location point is a location point on the preset track line, and the second location point and the first location point are different location points. The electronic device may display the second location point in the first display area in response to the first operation. To be specific, the user may select a location by performing the first operation on the rotatable component, and does not need to select the location by touching a location point on the display. This can effectively reduce an accidental touch, accurately select a location point required by the user, improve user experience, and have strong usability and practicability.

## Description

This application claims priority to Chinese Patent Application No. 202310295094.9, filed with the China National Intellectual Property Administration on March 20, 2023 and entitled "LOCATION SELECTION METHOD, ELECTRONIC DEVICE, AND COMPUTER-READABLE STORAGE MEDIUM", which is incorporated herein by reference in its entirety.

### TECHNICAL FIELD

This application belongs to the field of terminal technologies, and in particular, relates to a location selection method, an electronic device, and a computer-readable storage medium.

### BACKGROUND

With continuous development of terminal technologies, wearable devices (such as smartwatches) can implement more functions, and an increasing quantity of users are beginning to wear the smartwatches. Currently, a map application may be installed in the smartwatch, and a track line may be displayed in a map interface. The user may touch a location point on the track line to select a location, and the like. A display of the smartwatch is small, a quantity of location points on the track line is usually large, and the location points are distributed densely. As a result, an accidental touch is easily caused when a location is selected by touching a track point, and it is difficult to accurately select a location required by the user. This leads to poor user experience.

### SUMMARY

Embodiments of this application provide a location selection method, an electronic device, and a computer-readable storage medium, to resolve a problem in the conventional technology that user experience is poor as an accidental touch is easily caused when a location is selected by touching a track point and it is difficult to accurately select a location required by a user.

According to a first aspect, an embodiment of this application provides a location selection method, applied to an electronic device, where a rotatable component and a display are disposed in the electronic device. The method may include:
the electronic device displays a first location point in a first display area of the display, where the first location point is a location point on a preset track line, and the preset track line includes at least two location points;
the electronic device detects a first operation on the rotatable component; and
the electronic device displays a second location point in the first display area in response to the first operation, where the second location point is a location point on the preset track line, and the second location point and the first location point are different location points.

In the foregoing location selection method, when displaying the preset track line on the display, the electronic device may display the first location point on the preset track line in the first display area of the display. When a user wants to select the second location point on the preset track line, the user may perform the first operation on the rotatable component. After detecting the first operation, the electronic device may display, in the first display area, the second location point selected by the user. To be specific, the user may select a location by performing the first operation on the rotatable component, and does not need to select the location by touching a location point on the display. This can effectively reduce an accidental touch, accurately select a location point required by the user, and improve user experience.

For example, the preset track line may be a track line generated based on location points marked by the user in the electronic device. For example, after a map application in the electronic device is started, the electronic device may display a map interface on the display. In this case, the user may mark the location points in the map interface. The electronic device may generate the preset track line based on the location points marked by the user. Optionally, the electronic device may connect adjacent location points by using a straight line based on a marking sequence of the location points, to obtain the preset track line. Optionally, the electronic device may determine, based on road information and each location point, a route including each location point, and may determine the route as the preset track line.

For example, the preset track line may be a track line sent by a cloud or another electronic device to the electronic device. To be specific, the electronic device may be communicatively connected to the cloud or the another electronic device via a communication network. The cloud or the another electronic device may generate the preset track line based on the location points marked by the user, and may send the preset track line to the electronic device via the communication network, so that the electronic device displays the preset track line, navigates, and the like.

Optionally, initially, the first location point may be a location point determined by the electronic device by default. To be specific, when the user does not select a location point, the electronic device may determine the first location point by default. When displaying the preset track line on the display, the electronic device may display, in the first display area, the first location point determined by default. For example, the electronic device may determine any location point like a start point, a midpoint, or an end point of the preset track line as the first location point by default. For example, the electronic device may determine, as the first location point, a location point that is on the preset track line and that is closest to a current location of the user.

Optionally, the first operation may be a rotation operation.

In the location selection method provided in this implementation, the electronic device may switch, based on the rotation operation on the rotatable component, the first location point displayed in the first display area to the second location point selected by the user. In other words, the user can accurately and quickly select, by rotating the rotatable component only, a location point required by the user. The operation is simple and convenient, and no accidental touch is caused, so that user experience can be effectively improved.

In a possible implementation of the first aspect, that the electronic device displays the second location point in the first display area in response to the first operation may include:
the electronic device determines a rotation direction corresponding to the first operation;
the electronic device determines the second location point based on the rotation direction and the first location point; and
the electronic device displays the second location point in the first display area.

For example, that the electronic device determines the second location point based on the rotation direction and the first location point may include:
when the rotation direction is a first direction, the electronic device determines that a previous location point of the first location point on the preset track line is the second location point; or
when the rotation direction is a second direction, the electronic device determines that a next location point of the first location point on the preset track line is the second location point, where
the previous location point and the next location point of the first location point are determined based on a forward direction of the preset track line.

Optionally, the first direction is a clockwise rotation direction, and the second direction is a counterclockwise rotation direction; or the first direction is a counterclockwise rotation direction, and the second direction is a clockwise rotation direction.

In the location selection method provided in this implementation, the electronic device may determine the second location point based on a direction in which the user rotates the rotatable component, and switch the first location point displayed in the first display area to the second location point. In other words, the user can accurately and quickly switch the first location point displayed in the first display area to the selected second location point by rotating the rotatable component in different directions.

Optionally, the electronic device may move, by moving the map interface, the second location point to the first display area for display. For example, a movement quantity corresponding to the rotation operation may be set in the electronic device. The movement quantity may be a quantity of location points that need to be moved in each rotation operation. For example, when the movement quantity is one, after the electronic device receives the rotation operation, the electronic device may determine a location point adjacent to the first location point (for example, a previous location point or a next location point of the first location point) as the second location point, and may move the map interface, to move the second location point to the first display area for display. For example, when the movement quantity is two, after the electronic device detects the rotation operation, the electronic device may determine a location point spaced one location point from the first location point as the second location point, and may move the map interface, to move the second location point to the first display area for display.

In other words, when the rotation direction is the first direction, the electronic device determines that the previous location point of the first location point on the preset track line is the second location point; and when the rotation direction is the second direction, the electronic device determines that the next location point of the first location point on the preset track line is the second location point. This is merely an example for explanation, and should not be construed as a limitation on this embodiment of this application. In this embodiment of this application, the electronic device may determine the second location point based on the movement quantity corresponding to the rotation operation, the rotation direction, and the first location point. For example, when the rotation direction is the first direction and the movement quantity is two, it is assumed that the previous location point of the first location point on the preset track line is a location point A, and a previous location point of the location point A is a location point B. In this case, the electronic device may use the location point B on the preset track line as the second location point. For example, when the rotation direction is the second direction and the movement quantity is three, it is assumed that on the preset track line, the next location point of the first location point is a location point C, a previous location point of the location point C is a location point D, and a next location point of the location point D is a location point E. In this case, the electronic device may use the location point E on the preset track line as the second location point.

In another possible implementation of the first aspect, that the electronic device displays the second location point in the first display area in response to the first operation may include:
the electronic device determines a rotation direction and a rotation rate that correspond to the first operation;
the electronic device determines the second location point based on the rotation direction, the rotation rate, and the first location point; and
the electronic device displays the second location point in the first display area.

For example, that the electronic device determines the second location point based on the rotation direction, the rotation rate, and the first location point may include:
the electronic device determines, based on the rotation rate, a quantity of location points between the first location point and the second location point; and
the electronic device determines the second location point based on the rotation direction, the quantity of location points, and the first location point.

In the location selection method provided in this implementation, the electronic device may determine the second location point based on a direction and a rate in and at which the user rotates the rotatable component, and switch the first location point displayed in the first display area to the second location point. In other words, the user can accurately and quickly switch the first location point displayed in the first display area to the selected second location point by rotating the rotatable component in different directions and at different rates.

In a possible implementation of the first aspect, the method may further include:
the electronic device detects a touch operation on the second location point; and
the electronic device displays, on the display in response to the touch operation, location information corresponding to the second location point.

In the location selection method provided in this implementation, after the second location point is selected, that is, after the second location point is displayed in the first display area, if the user wants to view the location information corresponding to the second location point, the user may touch the second location point displayed on the display. When detecting the touch operation on the second location point, the electronic device may display, on the display in response to the touch operation, the location information corresponding to the second location point, that is, the location information corresponding to the second location point can be conveniently and quickly viewed by touching the second location point. This improves user experience.

In a possible implementation of the first aspect, the method may further include:
the electronic device detects a second operation on the rotatable component; and
the electronic device displays, on the display in response to the second operation, location information corresponding to the second location point.

For example, the second operation may be an operation of pressing the rotatable component.

In the location selection method provided in this implementation, after the second location point is selected, that is, after the second location point is displayed in the first display area, if the user wants to view the location information corresponding to the second location point, the user may press the rotatable component. When detecting a press operation on the rotatable component, the electronic device may display, on the display in response to the press operation, the location information corresponding to the second location point, that is, the location information corresponding to the second location point can be conveniently and quickly viewed by pressing the rotatable component. This improves user experience.

Optionally, the electronic device may be a smartwatch.

For example, the rotatable component may be a crown of the smartwatch.

In the location selection method provided in this implementation, the rotatable component may be the crown of the smartwatch. To be specific, the user may select the second location point by rotating the crown or the like. This not only facilitates an operation, but also does not need to select a location by touching a location point on the display, so that an accidental touch can be effectively reduced, and a location point required by the user can be accurately selected, and user experience is improved.

Optionally, the first display area may be a central area of the display.

In the location selection method provided in this implementation, the first display area may be the central area of the display, to display, in the central area of the display, a location point selected by the user, so that the user can conveniently perform a related operation on the selected location point, to improve user experience. A shape and a size of the first display area may be specifically determined based on an actual situation. This is not limited in embodiments of this application. For example, the first display area may be a circular area with a radius of 2 cm, or may be a rectangular area with a length of 2 cm and a width of 1 cm.

In a possible implementation of the first aspect, that the electronic device displays the second location point in the first display area may include:
the electronic device displays, in the first display area, an icon corresponding to the second location point.

In the location selection method provided in this implementation, to help the user know a location point selected by the user, when displaying the location point in the first display area, the electronic device may display an icon corresponding to the location point, for example, display, in the first display area, an icon corresponding to the first location point or the icon corresponding to the second location point. In other words, the icon corresponding to the location point is displayed in the first display area, and dots may be displayed in another area, so that each location point is represented by using the dot, to distinguish the location point from the location point selected by the user, so that the user can clearly know the selected location point.

For example, that the electronic device displays, in the first display area, the icon corresponding to the second location point may include:
the electronic device zooms in, based on a preset proportion, the icon corresponding to the second location point, and displays the zoomed-in icon in the first display area.

In the location selection method provided in this implementation, to help the user perform the related operation on the selected location point, when displaying, in the first display area, the icon corresponding to the location point, the electronic device may zoom in the icon corresponding to the location point based on the preset proportion. In other words, the first location point or the second location point displayed in the first display area is larger than another location point on the preset track line displayed on the display, to help the user conveniently perform an operation on the selected location point. This reduces a possibility of an accidental touch and improves user experience. In other words, a larger icon corresponding to the selected location point is displayed in the first display area, and a smaller icon or a dot corresponding to a location point is displayed in another area.

According to a second aspect, an embodiment of this application provides a location selection apparatus, used in an electronic device, where a rotatable component and a display are disposed in the electronic device. The apparatus may include:
a first location point display module, configured to display a first location point in a first display area of the display, where the first location point is a location point on a preset track line, and the preset track line includes at least two location points;
a first operation detection module, configured to detect a first operation on the rotatable component; and
a second location point display module, configured to display a second location point in the first display area in response to the first operation, where the second location point is a location point on the preset track line, and the second location point and the first location point are different location points.

Optionally, the first operation may be a rotation operation.

In a possible implementation of the second aspect, the second location point display module may include:
a rotation direction determining unit, configured to determine a rotation direction corresponding to the first operation;
a first determining unit, configured to determine the second location point based on the rotation direction and the first location point; and
a first display unit, configured to display the second location point in the first display area.

For example, the first determining unit is configured to: when the rotation direction is a first direction, determine that a previous location point of the first location point on the preset track line is the second location point; or when the rotation direction is a second direction, determine that a next location point of the first location point on the preset track line is the second location point, where
the previous location point and the next location point of the first location point are determined based on a forward direction of the preset track line.

Optionally, the first direction is a clockwise rotation direction, and the second direction is a counterclockwise rotation direction; or the first direction is a counterclockwise rotation direction, and the second direction is a clockwise rotation direction.

In another possible implementation of the second aspect, the second location point display module may include:
a rotation rate determining unit, configured to determine a rotation direction and a rotation rate that correspond to the first operation;
a second determining unit, configured to determine the second location point based on the rotation direction, the rotation rate, and the first location point; and
a second display unit, configured to display the second location point in the first display area.

For example, the second determining unit is specifically configured to: determine, based on the rotation rate, a quantity of location points between the first location point and the second location point; and determine the second location point based on the rotation direction, the quantity of location points, and the first location point.

In a possible implementation of the second aspect, the apparatus may further include:
a touch operation detection unit, configured to detect a touch operation on the second location point; and
a first location information display unit, configured to display, on the display in response to the touch operation, location information corresponding to the second location point.

In a possible implementation of the second aspect, the apparatus may further include:
a second operation detection unit, configured to detect a second operation on the rotatable component; and
a second location information display unit, configured to display, on the display in response to the second operation, location information corresponding to the second location point.

For example, the second operation may be an operation of pressing the rotatable component.

Optionally, the electronic device may be a smartwatch.

For example, the rotatable component may be a crown of the smartwatch.

Optionally, the first display area may be a central area of the display.

In a possible implementation of the second aspect, the first location point display module is further configured to display, in the first display area, an icon corresponding to the second location point.

For example, the first location point display module is further configured to zoom in, based on a preset proportion, the icon corresponding to the second location point, and display the zoomed-in icon in the first display area.

According to a third aspect, an embodiment of this application provides an electronic device, including a memory, a processor, and a computer program that is stored in the memory and that is able to be run on the processor, where when the processor executes the computer program, the electronic device is enabled to implement the location selection method according to any one of the implementations of the first aspect.

According to a fourth aspect, an embodiment of this application provides a computer-readable storage medium, where the computer-readable storage medium stores a computer program, and when the computer program is executed by a computer, the computer is enabled to implement the location selection method according to any one of the implementations of the first aspect.

According to a fifth aspect, an embodiment of this application provides a computer program product, where when the computer program product is run on an electronic device, the electronic device is enabled to perform the location selection method according to any one of the implementations of the first aspect.

It may be understood that for beneficial effects of the second aspect to the fifth aspect, refer to the related descriptions in the first aspect. Details are not described herein again.

### BRIEF DESCRIPTION OF DRAWINGS

FIG. 1 is a diagram of a structure of a smartwatch to which a location selection method is applicable according to an embodiment of this application;
FIG. 2 is a diagram of a software architecture to which a location selection method is applicable according to an embodiment of this application;
FIG. 3 is a schematic flowchart of a location selection method according to an embodiment of this application;
FIG. 4 is a diagram 1 of an application scenario according to an embodiment of this application;
FIG. 5 is a diagram 2 of an application scenario according to an embodiment of this application;
FIG. 6 is a diagram 3 of an application scenario according to an embodiment of this application;
FIG. 7 is a diagram 4 of an application scenario according to an embodiment of this application;
FIG. 8 is a diagram 5 of an application scenario according to an embodiment of this application; and
FIG. 9 is a diagram 6 of an application scenario according to an embodiment of this application.

### DESCRIPTION OF EMBODIMENTS

It should be understood that the term "include"/"comprise" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims refers to any combination of one or more of associated items and all possible combinations, and includes such combinations.

As used in the specification of this application and the appended claims, the term "if" may be interpreted as "when" or "once" or "in response to determining" or "in response to detecting" depending on the context. Similarly, the phrase "if it is determined" or "if [described condition or event] is detected" may be interpreted, depending on the context, to mean "once determined" or "in response to determining" or "once [described condition or event] is detected" or "in response to detecting [described condition or event]".

In addition, in the descriptions of the specification and the appended claims of this application, the terms "first", "second", "third", and the like are merely intended for a purpose of differentiated description, but shall not be understood as an indication or an implication of relative importance.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In addition, "a plurality of" mentioned in embodiments of this application should be interpreted as two or more.

Steps in a location selection method provided in embodiments of this application are merely examples. Not all steps are mandatory steps, or not content in each piece of information or a message is mandatory. In a use process, the step or the content may be added or removed based on a requirement. In different embodiments, mutual reference is made to a same step or steps or messages having a same function in embodiments of this application.

A service scenario described in embodiments of this application is intended to describe the technical solutions in embodiments of this application more clearly, and does not constitute a limitation on the technical solutions provided in embodiments of this application. Persons of ordinary skill in the art may know that, with evolution of network architectures and emergence of new service scenarios, the technical solutions provided in embodiments of this application are also applicable to similar technical problems.

With continuous development of terminal technologies, wearable devices such as smartwatches can implement more functions, and an increasing quantity of users are beginning to wear the smartwatches. A map application may be installed in the smartwatch. When using the map application, the user may mark location points to obtain a track line, and may display the track line and the location points in a map interface. When the track line and the location points are displayed, the user may touch a location point on the track line to select a location, and the like. A display of the smartwatch is small, a quantity of location points on the track line is usually large, and the location points are distributed densely. As a result, an accidental touch is easily caused when a location is selected by touching a track point, and it is difficult to accurately select a location required by the user. This leads to poor user experience.

To resolve the foregoing problem, embodiments of this application provide a location selection method. The method may be applied to an electronic device having a rotatable component and a display. In the method, the electronic device may display a preset track line on the display, and display a first location point on the preset track line in a first display area of the display. When a user wants to select a second location point, the user may perform a first operation on the rotatable component, where the second location point is a location point on the preset track line, and the second location point and the first location point are different location points. The electronic device may display the second location point in the first display area in response to the first operation. To be specific, the user may select a location by performing the first operation on the rotatable component, and does not need to select the location by touching a location point on the display. This can effectively reduce an accidental touch, accurately select a location point required by the user, improve user experience, and have strong usability and practicability.

In embodiments of this application, the electronic device may be a wearable device having a small-sized display, for example, a smartwatch or a smart band. A specific type of the electronic device is not limited in embodiments of this application. The following uses the smartwatch as an example for description.

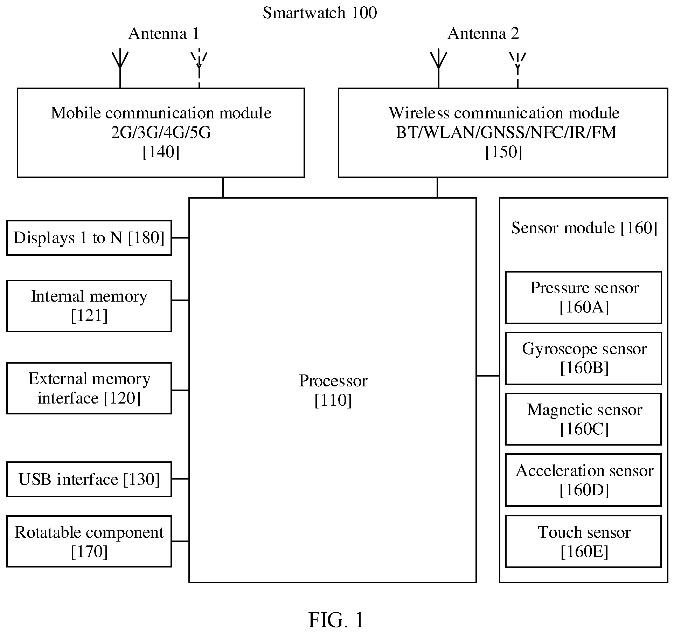

FIG. 1 is a diagram of a structure of a smartwatch 100.

The smartwatch 100 may include a processor 110, an external memory interface 120, an internal memory 121, a universal serial bus (universal serial bus, USB) interface 130, an antenna 1, an antenna 2, a mobile communication module 140, a wireless communication module 150, a sensor module 160, a rotatable component 170, a display 180, and the like. The sensor module 160 may include a pressure sensor 160A, a gyroscope sensor 160B, a magnetic sensor 160C, an acceleration sensor 160D, a touch sensor 160E, and the like.

It may be understood that an illustrated structure in this embodiment of this application does not constitute a specific limitation on the smartwatch 100. In some other embodiments of this application, the smartwatch 100 may include more or fewer components than those shown in the figure, or some components may be combined, or some components may be split, or there may be a different component layout. The components shown in figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be coupled to the touch sensor 160E through the I2C interface, so that the processor 110 communicates with the touch sensor 160E through the I2C bus interface, to implement a touch function of the smartwatch 100.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 150. For example, the processor 110 communicates with a Bluetooth module in the wireless communication module 150 through the UART interface, to implement a Bluetooth function. The MIPI interface may be configured to connect the processor 110 to a peripheral component like the display 180. The MIPI interface includes a camera serial interface (camera serial interface, CSI), a display serial interface (display serial interface, DSI), or the like. In some embodiments, the processor 110 communicates with the display 180 through the DSI interface, to implement a display function of the smartwatch 100.

The GPIO interface may be configured by software. The GPIO interface may be configured for control signals or data signals. In some embodiments, the GPIO interface may be configured to connect the processor 110 to the display 180, the wireless communication module 150, the sensor module 160, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the smartwatch 100, or may be configured to perform data transmission between the smartwatch 100 and a peripheral device. The interface may be further configured to connect to another electronic device like an AR device.

It may be understood that an interface connection relationship between the modules shown in this embodiment of this application is merely an example for description, and does not constitute a limitation on the structure of the smartwatch 100. In some other embodiments of this application, the smartwatch 100 may alternatively use an interface connection manner different from that in the foregoing embodiment, or use a combination of a plurality of interface connection manners.

A wireless communication function of the smartwatch 100 may be implemented through the antenna 1, the antenna 2, the mobile communication module 140, the wireless communication module 150, the modem processor, the baseband processor, and the like.

The antenna 1 and the antenna 2 are configured to: transmit and receive electromagnetic wave signals. Each antenna in the smartwatch 100 may be configured to cover a single or a plurality of communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 140 may provide a wireless communication solution that is applied to the smartwatch 100 and that includes 2G/3G/4G/5G or the like. The mobile communication module 140 may include at least one filter, a switch, a power amplifier, a low noise amplifier (low noise amplifier, LNA), and the like. The mobile communication module 140 may receive an electromagnetic wave through the antenna 1, perform processing such as filtering and amplification on the received electromagnetic wave, and transmit a processed electromagnetic wave to the modem processor for demodulation. The mobile communication module 140 may further amplify a signal modulated by the modem processor, and convert the signal into an electromagnetic wave for radiation through the antenna 1. In some embodiments, at least some functional modules of the mobile communication module 140 may be disposed in the processor 110. In some embodiments, at least some functional modules in the mobile communication module 140 and at least some modules in the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transfers the low-frequency baseband signal obtained through demodulation to the baseband processor for processing. The baseband processor processes the low-frequency baseband signal, and then transmits a processed signal to the application processor. The application processor displays an image or a video through the display 180. In some embodiments, the modem processor may be an independent component. In some other embodiments, the modem processor may be independent of the processor 110, and is disposed in a same device as the mobile communication module 140 or another functional module.

The wireless communication module 150 may provide a wireless communication solution that is applied to the smartwatch 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 150 may be one or more components integrating at least one communication processor module. The wireless communication module 150 receives an electromagnetic wave through the antenna 2, performs frequency modulation and filtering processing on an electromagnetic wave signal, and sends a processed signal to the processor 110. The wireless communication module 150 may further receive a to-be-sent signal from the processor 110, perform frequency modulation and amplification on the signal, and convert the signal into an electromagnetic wave for radiation through the antenna 2.

In some embodiments, in the smartwatch 100, the antenna 1 and the mobile communication module 140 are coupled, and the antenna 2 and the wireless communication module 150 are coupled, so that the smartwatch 100 can communicate with a network and another device by using a wireless communications technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The smartwatch 100 implements a display function through the GPU, the display 180, the application processor, and the like. The GPU is a microprocessor for image processing, and is connected to the display 180 and the application processor. The GPU is configured to: perform mathematical and geometric computation, and render an image. The processor 110 may include one or more GPUs, which execute program instructions to generate or change display information.

The display 180 is configured to display an image, a video, and the like. The display 180 includes a display panel. The display panel may use a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini LED, a micro LED, a micro OLED, a quantum dot light-emitting diode (quantum dot light emitting diode, QLED), and the like. In some embodiments, the smartwatch 100 may include one or N displays 180, where N is a positive integer greater than 1.

The digital signal processor is configured to process a digital signal. In addition to the digital image signal, the digital signal processor may further process another digital signal. For example, when the smartwatch 100 selects a frequency, the digital signal processor is configured to perform Fourier transform on energy of the frequency.

The video codec is configured to: compress or decompress a digital video. The smartwatch 100 may support one or more video codecs. Therefore, the smartwatch 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by drawing on a structure of a biological neural network, for example, by drawing on a transfer mode between human brain neurons, and may further continuously perform self-learning. The NPU may be used for implementing applications such as intelligent cognition of the smartwatch 100, for example, image recognition, facial recognition, speech recognition, and text understanding.

The external memory interface 120 may be configured to connect to an external memory card, for example, a micro SD card, to extend a storage capability of the smartwatch 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The internal memory 121 may include a program storage area and a data storage area. The program storage area may store an operating system, an application required by at least one function (for example, a voice playing function or an image playing function), and the like. The data storage area may store data (such as audio data and a phone book) and the like created during use of the smartwatch 100. In addition, the internal memory 121 may include a high-speed random access memory, and may further include a nonvolatile memory, for example, at least one magnetic disk storage device, a flash storage device, or a universal flash storage (universal flash storage, UFS). The processor 110 runs the instructions stored in the internal memory 121 and/or instructions stored in the memory disposed in the processor, to perform various function applications and data processing of the smartwatch 100.

The pressure sensor 160A is configured to sense a pressure signal, and can convert the pressure signal into an electrical signal. In some embodiments, the pressure sensor 160A may be disposed on the display 180. There are many types of pressure sensors 160A, such as a resistive pressure sensor, an inductive pressure sensor, and a capacitive pressure sensor. The capacitive pressure sensor may include at least two parallel plates made of conductive materials. When a force is applied to the pressure sensor 160A, capacitance between electrodes changes. The smartwatch 100 determines a pressure strength based on a change of the capacitance. When a touch operation acts on the display 180, the smartwatch 100 detects intensity of the touch operation based on the pressure sensor 160A. The smartwatch 100 may also calculate a touch location based on a detection signal of the pressure sensor 160A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 160B may be configured to determine a motion posture of the smartwatch 100. In some embodiments, an angular velocity of the smartwatch 100 around three axes (namely, x, y, and z axes) may be determined by using the gyroscope sensor 160B. The gyroscope sensor 160B may be used in a navigation scenario and a motion-sensing game scenario.

The magnetic sensor 160C includes a Hall sensor. The smartwatch 100 may detect opening and closing of a flip cover by using the magnetic sensor 160C.

The acceleration sensor 160D may detect magnitudes of acceleration of the smartwatch 100 in various directions (usually on three axes). When the smartwatch 100 is in a static state, a magnitude and a direction of gravity may be detected. The acceleration sensor may be further configured to identify a posture of the smartwatch, and be used in an application such as switching between a landscape mode and a portrait mode or a pedometer.

The touch sensor 160E is also referred to as a "touch component". The touch sensor 160E may be disposed on the display 180, and the touch sensor 160E and the display 180 constitute a touchscreen, which is also referred to as a "touch screen". The touch sensor 160E is configured to detect a touch operation performed on or near the touch sensor 160E. The touch sensor may transfer the detected touch operation to the application processor, to determine a touch event type. A visual output related to the touch operation may be provided through the display 180. In some other embodiments, the touch sensor 160E may alternatively be disposed on a surface of the smartwatch 100 at a location different from that of the display 180.

The rotatable component 170 may be a mechanical button. The smartwatch 100 may receive a button input of the rotatable component 170, and generate a button signal input related to a user setting and function control of the smartwatch 100. For example, when a preset track line is displayed on the display 180, the smartwatch 100 may switch, based on a first operation on the rotatable component, a location point displayed in a central area of the display 180.

A software system of the smartwatch 100 may use a layered architecture, an event-driven architecture, a microkernel architecture, a micro service architecture, or a cloud architecture. For example, the software system of the smartwatch 100 may use an Android operating system (Operating System, OS), a Harmony operating system (Harmony OS), an iOS, or the like that has the layered architecture. In embodiments of this application, the Android system with the layered architecture is used as an example to describe the software structure of the smartwatch 100.

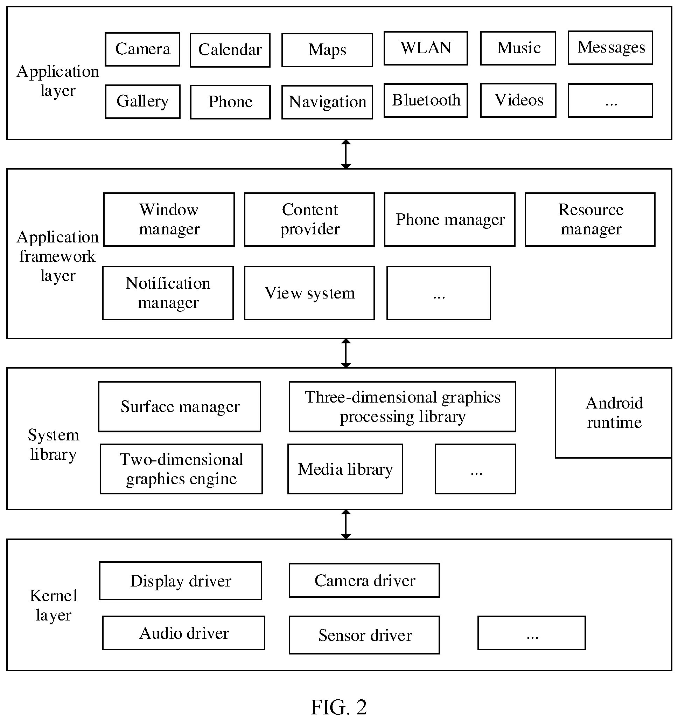

FIG. 2 is a block diagram of a software structure of the smartwatch 100 in embodiments of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, an application package may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the smartwatch 100, for example, management of a call status (including answering, hang-up, or the like).

The resource manager provides various resources such as a localized character string, an icon, an image, a layout file, and a video file for an application.

The notification manager enables an application to display notification information in a status bar, and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in the status bar, an alert tone is made, the electronic device vibrates, or an indicator blinks.

The Android runtime includes a kernel library and a virtual machine. The Android runtime is responsible for scheduling and management of the Android system.

The kernel library includes two parts: One part is a performance function that needs to be invoked by the Java language, and the other part is an Android kernel library.

The application layer and the application framework layer run in the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem and provide fusion of two-dimensional and three-dimensional layers for a plurality of applications.

The media library supports playback and recording of a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing.

The kernel layer is a layer between hardware and software. The kernel layer includes at least a display driver, a camera driver, an audio driver, and a sensor driver.

The following describes in detail the location selection method provided in embodiments of this application with reference to the accompanying drawings and specific application scenarios.

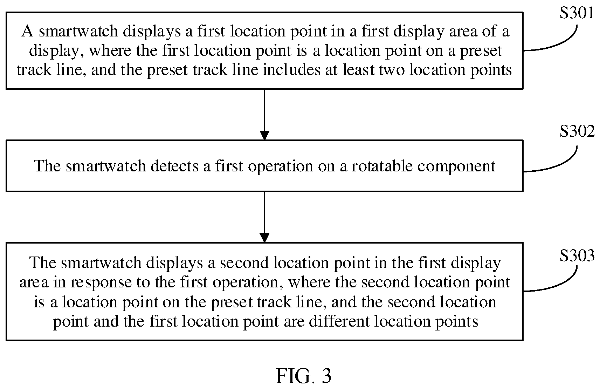

FIG. 3 is a schematic flowchart of the location selection method according to an embodiment of this application. The method may be applied to the smartwatch shown in FIG. 1. A rotatable component and a display may be disposed in the smartwatch. As shown in FIG. 3, the method may include the following steps.

S301: The smartwatch displays a first location point in a first display area of the display, where the first location point is a location point on a preset track line, and the preset track line includes at least two location points.

S302: The smartwatch detects a first operation on the rotatable component.

S303: The smartwatch displays a second location point in the first display area in response to the first operation, where the second location point is a location point on the preset track line, and the second location point and the first location point are different location points.

In this embodiment of this application, when displaying the preset track line on the display, the smartwatch may display the first location point on the preset track line in the first display area of the display. When a user wants to select the second location point on the preset track line, the user may perform the first operation on the rotatable component. After detecting the first operation, the smartwatch may display, in the first display area, the second location point selected by the user. To be specific, the user may select a location by performing the first operation on the rotatable component, and does not need to select the location by touching a location point on the display. This can effectively reduce an accidental touch, accurately select a location point required by the user, and improve user experience.

For example, the preset track line may be a track line generated based on location points marked by the user in the smartwatch. For example, after a map application in the smartwatch is started, the smartwatch may display a map interface on the display. In this case, the user may mark the location points in the map interface. The smartwatch may generate the preset track line based on the location points marked by the user. Optionally, the smartwatch may connect adjacent location points by using a straight line based on a marking sequence of the location points, to obtain the preset track line. Optionally, the smartwatch may determine, based on road information and each location point, a route including each location point, and may determine the route as the preset track line.

For example, the preset track line may be a track line sent by a cloud or another electronic device to the smartwatch. To be specific, the smartwatch may be communicatively connected to the cloud or the another electronic device via a communication network. The cloud or the another electronic device may generate the preset track line based on the location points marked by the user, and may send the preset track line to the smartwatch via the communication network, so that the smartwatch displays the preset track line, navigates, and the like.

Optionally, initially, the first location point may be a location point determined by the smartwatch by default. To be specific, when the user does not select a location point, the smartwatch may determine the first location point by default. When displaying the preset track line on the display, the smartwatch may display, in the first display area, the first location point determined by default.

For example, the smartwatch may determine any location point like a start point, a midpoint, or an end point of the preset track line as the first location point by default. The midpoint may be a location point in a middle location on the preset track line. It should be understood that the middle location may be a location determined based on a distance, or may be a location determined based on a quantity of location points, that is, the middle location may be a middle position in terms of a distance, or may be a middle position in terms of a quantity. In other words, when the preset track line is initially displayed, the smartwatch may display the preset track line in a manner in which the start point, the midpoint, the end point, or the like of the preset track line is located in the first display area.

For example, the smartwatch may obtain a current location of the user, and may determine, as the first location point by default, a location point that is on the preset track line and that is closest to the current location of the user. In other words, when the preset track line is initially displayed, the smartwatch may display the preset track line in a manner in which the location point closest to the current location of the user is located in the first display area.

It should be understood that, after the user selects a location point, the first location point may be the location point selected by the user, for example, the second location point described above. In other words, after the smartwatch displays the second location point in the first display area in response to the first operation, the second location point may change to the first location point. Therefore, when the second location point selected by the user is displayed in the first display area, the smartwatch may continue to display a new second location point in the first display area based on the first operation performed by the user on the rotatable component.

For example, the first display area may be a central area of the display, to display, in the central area of the display, a selected location point, so that the user can conveniently perform a related operation on the selected location point, to improve user experience. A shape and a size of the first display area may be specifically determined based on an actual situation. This is not limited in embodiments of this application. For example, the first display area may be a circular area with a radius of 2 cm, or may be a rectangular area with a length of 2 cm and a width of 1 cm.

It should be noted that the first display area being the central area of the display is merely an example for explanation, and should not be construed as a limitation on embodiments of this application. In this embodiment of this application, any area on the display may alternatively be determined as the first display area based on an actual requirement. For example, a display area on a left side of the display may be determined as the first display area, or a display area on an upper side of the display may be determined as the first display area.

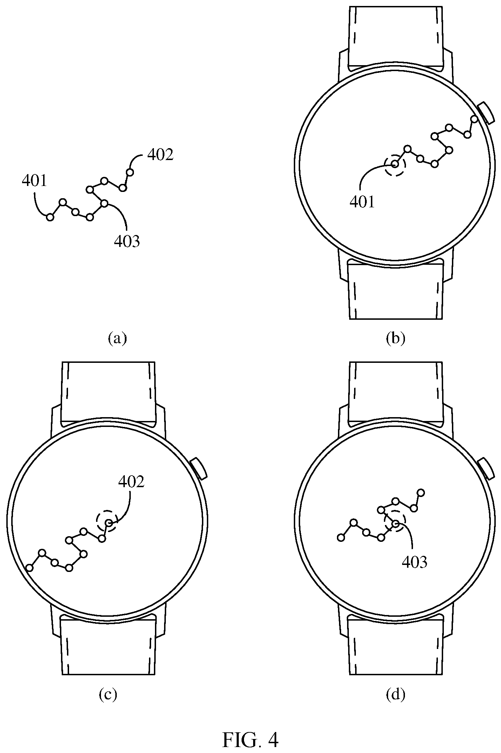

FIG. 4 is a diagram 1 of an application scenario according to an embodiment of this application. In this application scenario, an example in which the first display area is the central area of the display is used for description. In FIG. 4, an example in which a circular area represented by a dashed line is the central area of the display is used.

The smartwatch may generate, based on location points marked by the user, a preset track line shown in (a) in FIG. 4. The preset track line may include a start point 401, an end point 402, and a midpoint 403. It should be understood that the start point 401 and the end point 402 may be customized by the user, or may be determined by the smartwatch by default. In FIG. 4, an example in which the midpoint 403 is a location point of a middle location determined based on a distance is used for description.

As shown in (b) in FIG. 4, when the preset track line is initially displayed, the smartwatch may determine the start point 401 of the preset track line as the first location point by default. Therefore, when the preset track line is displayed on the display, the smartwatch may display the preset track line in a manner in which the start point 401 of the preset track line is located in the first display area.

Alternatively, as shown in (c) in FIG. 4, when the preset track line is initially displayed, the smartwatch may determine the end point 402 of the preset track line as the first location point by default. Therefore, when the preset track line is displayed on the display, the smartwatch may display the preset track line in a manner in which the end point 402 of the preset track line is located in the first display area.

Alternatively, when the preset track line is initially displayed, the smartwatch may obtain a current location of the user, and may determine, as the first location point by default, a location point that is on the preset track line and that is closest to the current location of the user. It is assumed that the location point that is on the preset track line and that is closest to the current location of the user is the midpoint 403. As shown in (d) in FIG. 4, when the preset track line is displayed on the display, the smartwatch may display the preset track line in a manner in which the midpoint 403 is located in the first display area.

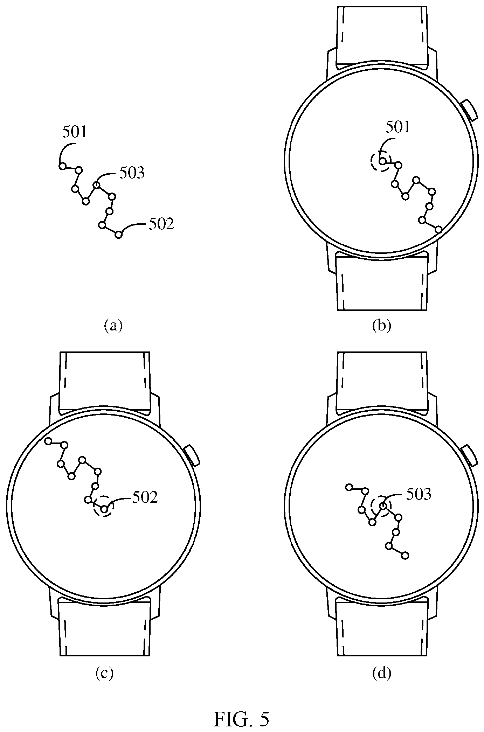

FIG. 5 is a diagram 2 of an application scenario according to an embodiment of this application. In this application scenario, an example in which the first display area is the central area of the display is used for description. In FIG. 5, an example in which a circular area represented by a dashed line is the central area of the display is used.

The smartwatch may generate, based on location points marked by the user, a preset track line shown in (a) in FIG. 5. The preset track line may include a start point 501, an end point 502, and a midpoint 503. Similarly, in FIG. 5, an example in which the midpoint 503 is a location point of a middle location determined based on a distance is used for description.

As shown in (b) in FIG. 5, when the preset track line is initially displayed, the smartwatch may determine the start point 501 of the preset track line as the first location point by default. Therefore, when the preset track line is displayed on the display, the smartwatch may display the preset track line in a manner in which the start point 501 of the preset track line is located in the first display area.

Alternatively, as shown in (c) in FIG. 5, when the preset track line is initially displayed, the smartwatch may determine the end point 502 of the preset track line as the first location point by default. Therefore, when the preset track line is displayed on the display, the smartwatch may display the preset track line in a manner in which the end point 502 of the preset track line is located in the first display area.

Alternatively, when the preset track line is initially displayed, the smartwatch may obtain a current location of the user, and may determine, as the first location point by default, a location point that is on the preset track line and that is closest to the current location of the user. It is assumed that the location point that is on the preset track line and that is closest to the current location of the user is the midpoint 503. As shown in (d) in FIG. 5, when the preset track line is displayed on the display, the smartwatch may display the preset track line in a manner in which the midpoint 503 is located in the first display area.

For example, the rotatable component may be a crown of the smartwatch. When the preset track line is displayed on the display of the smartwatch, the user may perform the first operation on the crown of the smartwatch, to select a location point. To be specific, the user may perform the first operation on the crown of the smartwatch, to switch the location point displayed in the first display area, so as to display, in the first display area, the second location point selected by the user. Optionally, the smartwatch may move, by moving the map interface, the second location point to the first display area for displaying, to help the user perform a related operation on the selected second location point, for example, to help the user view location information of the second location point.

In an example, performing the first operation on the crown of the smartwatch to select a location point may be an optional function of the smartwatch. The user may enable or disable the optional function based on an actual situation. That is, only after the user enables the optional function based on the actual requirement, the smartwatch displays, in the first display area in response to the first operation performed by the user on the crown, the second location point selected by the user. However, when the optional function is not enabled, the smartwatch does not display the second location point in the first display area based on the first operation performed by the user on the crown, that is, when the user performs the first operation on the crown, the smartwatch does not switch the location point displayed in the first display area.

Optionally, after the optional function is enabled, when displaying the preset track line on the display, the smartwatch may further display prompt information on the display, where the prompt information prompts the user to select a location by rotating the crown. For example, the prompt information may be "Rotate the crown to switch a location". The prompt information may be displayed in any area of the display. This is not limited in embodiments of this application.

It should be understood that a manner of enabling the optional function is not limited in embodiments of this application, and may be specifically determined based on an actual situation. For example, when the preset track line is displayed on the display, the smartwatch may display a function menu on the display, where the function menu may include a setting menu bar corresponding to the optional function. Therefore, the user may enable or disable the optional function or the like by using the setting menu bar. The function menu may be displayed in any area of the display. This is not limited in embodiments of this application.

For example, when the preset track line is displayed on the display, the smartwatch may enable the optional function by default, and may display, on the display, an "Off" button corresponding to the optional function. When the user wants to disable the optional function, the user may directly touch the "Off" button on the display. When detecting the touch operation on the "Off" button, the smartwatch may disable the optional function. In this case, the smartwatch does not respond to the first operation on the crown to display the second location point in the first display area.

It should be noted that a display area of the "Off" button on the display is not limited in embodiments of this application, and may be specifically determined based on an actual situation. For example, the smartwatch may display the "Off" button in a display area on a lower side of the display, or may display the "Off" button in a display area on an upper side of the display. The following uses an example in which the "Off" button is displayed in the display area on the lower side of the display for description.

Optionally, the first operation may be a rotation operation. To be specific, the user may select a location point by rotating the crown of the smartwatch. In other words, when the user wants to select the location point, the user may rotate the crown of the smartwatch. After detecting the rotation operation on the crown, the smartwatch may determine the second location point selected by the user, and may display the second location point in the first display area, to help the user perform the related operation on the second location point. In other words, the user can accurately select a required location point by rotating the crown only. The operation is simple and convenient, and no accidental touch is caused, so that user experience can be effectively improved.

In a possible implementation, after detecting the rotation operation on the crown, the smartwatch may determine a rotation direction corresponding to the rotation operation, and may determine the second location point based on the rotation direction and the first location point. Then, the smartwatch may display the second location point in the first display area. The rotation direction may be a clockwise rotation direction or a counterclockwise rotation direction.

Optionally, when the rotation direction is the clockwise rotation direction, the smartwatch may determine a previous location point of the first location point as the second location point; or when the rotation direction is the counterclockwise rotation direction, the smartwatch may determine a next location point of the first location point as the second location point. In other words, when the crown is rotated clockwise, the smartwatch may display the previous location point of the first location point in the first display area. When the crown is rotated counterclockwise, the smartwatch may display the next location point of the first location point in the first display area.

Alternatively, when the rotation direction is the clockwise rotation direction, the smartwatch may determine a next location point of the first location point as the second location point; or when the rotation direction is the counterclockwise rotation direction, the smartwatch may determine a previous location point of the first location point as the second location point. In other words, when the crown is rotated clockwise, the smartwatch may display the next location point of the first location point in the first display area. When the crown is rotated counterclockwise, the smartwatch may display the previous location point of the first location point in the first display area.

It may be understood that the previous location point and the next location point of the first location point may be determined based on a forward direction of the preset track line. The forward direction of the preset track line may be a direction from the start point to the end point. For example, when the preset track line sequentially includes the start point, a location point A, a location point B, a location point C, a location point D, a location point E, and the end point, the forward direction of the preset track line may be the start point->the location point A->the location point B->the location point C->the location point D->the location point E->the end point. It is assumed that the first location point is the location point B; in this case, the previous location point of the first location point is the location point A, and the next location point of the first location point is the location point C. It is assumed that the first location point is the location point A; in this case, the previous location point of the first location point is the start point, and the next location point of the first location point is the location point B.

For example, a movement quantity corresponding to the rotation operation may be set in the electronic device. The movement quantity may be a quantity of location points that need to be moved in each rotation operation. For example, when the movement quantity is one, after the electronic device detect the rotation operation, the electronic device may determine a location point adjacent to the first location point (for example, the previous location point or the next location point of the first location point) as the second location point, and may move the map interface, to move the second location point to the first display area for display. For example, when the movement quantity is two, after the electronic device detects the rotation operation, the electronic device may determine a location point spaced one location point from the first location point as the second location point, and may move the map interface, to move the second location point to the first display area for display.

In other words, when the rotation direction is the first direction, the electronic device determines that the previous location point of the first location point on the preset track line is the second location point; and when the rotation direction is the second direction, the electronic device determines that the next location point of the first location point on the preset track line is the second location point, and the like. This is merely an example for explanation, and should not be construed as a limitation on this embodiment of this application. In this embodiment of this application, the electronic device may determine the second location point based on the movement quantity corresponding to the rotation operation, the rotation direction, and the first location point. For example, when the rotation direction is the first direction and the movement quantity is two, it is assumed that the previous location point of the first location point on the preset track line is a location point A, and a previous location point of the location point A is a location point B. In this case, the electronic device may use the location point B on the preset track line as the second location point. For example, when the rotation direction is the second direction and the movement quantity is three, it is assumed that on the preset track line, the next location point of the first location point is a location point C, a previous location point of the location point C is a location point D, and a next location point of the location point D is a location point E. In this case, the electronic device may use the location point E on the preset track line as the second location point.

In an example, to help the user know a location point selected by the user, when displaying the location point in the first display area, the smartwatch may display an icon corresponding to the location point, for example, display, in the first display area, an icon corresponding to the first location point or an icon corresponding to the second location point. For example, the icon corresponding to the location point is displayed in the first display area, and dots are displayed in another area, so that each location point is represented by using the dot. Therefore, when the smartwatch switches the first location point in the first display area to the second location point, the first location point is displayed on the display in the dot form.

In another example, to help the user perform the related operation on the selected location point, when displaying, in the first display area, the icon corresponding to the location point, the smartwatch may zoom in the icon corresponding to the location point based on a preset proportion. In other words, the first location point or the second location point displayed in the first display area is larger than another location point on the preset track line displayed on the display, to help the user conveniently perform an operation on the selected location point. This reduces a possibility of an accidental touch and improves user experience. In other words, a larger icon corresponding to the selected location point is displayed in the first display area, a smaller icon or a dot corresponding to another location point is displayed in another area, and the like.

It should be noted that the preset proportion is not limited in embodiments of this application, and may be determined based on an actual situation. For example, the smartwatch may determine the preset proportion based on a size of the first display area, so that the icon displayed in the first display area is less than or equal to the size of the first display area.

For example, when the smartwatch displays the preset track line on the display, the smartwatch may further display a "Zoom in" button and a "Zoom out" button on the display. The "Zoom in" button is used to zoom in the map interface on the display. The "Zoom out" button is used to zoom out the map interface on the display.

In embodiments of this application, display areas of the "Zoom in" button and the "Zoom out" button on the display are not limited, and may be specifically determined based on an actual situation. For example, the "Zoom in" button may be displayed in a display area on a right side of the display, and the "Zoom out" button may be displayed in a display area on a left side of the display. For example, the "Zoom in" button may be displayed in a display area on a left side of the display, and the "Zoom out" button may be displayed in a display area on a right side of the display. For example, the "Zoom in" button may be displayed in a display area on an upper side of the display, and the "Zoom out" button may be displayed in a display area on a lower side of the display.

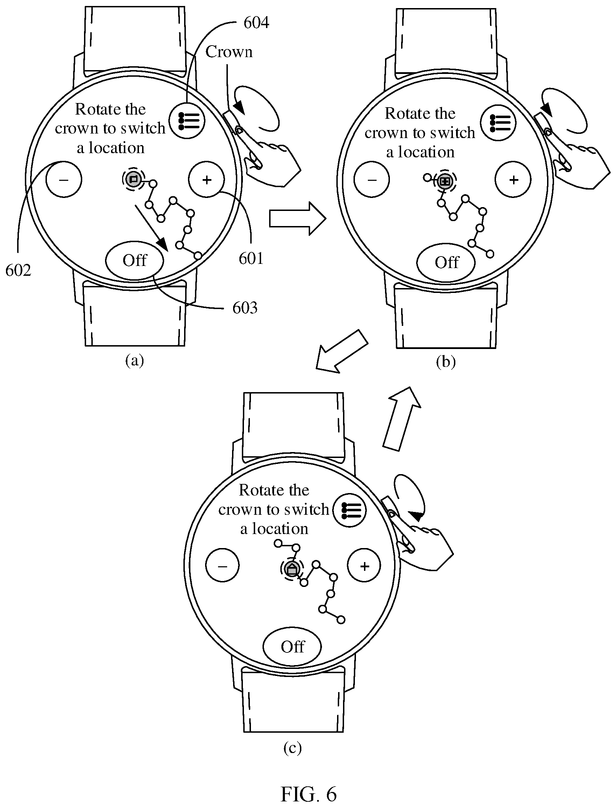

FIG. 6 is a diagram 3 of an application scenario according to an embodiment of this application. In this application scenario, an example in which the previous location point of the first location point is displayed in the first display area when the crown is rotated clockwise, the next location point of the first location point is displayed in the first display area when the crown is rotated counterclockwise, and the first display area is the central area of the display is used for description.

As shown in (a) in FIG. 6, initially, the smartwatch may determine the start point on the preset track line as the first location point by default, and may display, in the central area of the display, an icon corresponding to the start point (namely, an icon that is zoomed in based on the preset proportion). In addition, a "Zoom in" button 601 may be displayed in a display area on a right side of the display, a "Zoom out" button 602 may be displayed in a display area on a left side of the display, an "Off" button 603 may be displayed in a display area on a lower side of the display, and prompt information "Rotate the crown to switch a location" and a function menu 604 are displayed in a display area on an upper side of the display. The forward direction of the preset track line is a direction shown by arrows in (a) in FIG. 6. The preset track line may sequentially include the start point, a location point A1, a location point B1, a location point C1, a location point D1, a location point E1, a location point F1, a location point G1, and the end point from the start point to the end point.

As shown in (a) in FIG. 6, when the user wants to select the location point A1, the user may rotate the crown counterclockwise. As shown in (b) in FIG. 6, after detecting the counterclockwise rotation operation on the crown, the smartwatch may determine that a next location point of the start point is the second location point selected by the user, that is, may determine that the location point A1 is the location point selected by the user. Therefore, the smartwatch may zoom in, based on the preset proportion, an icon corresponding to the location point A1, and may display the zoomed-in icon of the location point A1 in the central area of the display. In addition, the smartwatch may restore the start point to a dot for display.

As shown in (b) in FIG. 6, when the user wants to continue to select the location point B1, the user may rotate the crown counterclockwise again. As shown in (c) in FIG. 6, when detecting the counterclockwise rotation operation on the crown, the smartwatch may determine that a next location point of the location point A1 is the second location point that the user wants to select, that is, may determine that the location point B1 is the location point that the user wants to select. Therefore, the smartwatch may zoom in, based on the preset proportion, an icon corresponding to the location point B1, and may display the zoomed-in icon of the location point B1 in the central area of the display. In addition, the smartwatch may restore the location point A1 to a dot for display.

As shown in (c) in FIG. 6, when the user wants to return to the location point A1, the user may rotate the crown clockwise. When detecting the clockwise rotation operation on the crown, the smartwatch may determine that a previous location point of the location point B1 is the second location point that the user wants to select, that is, may determine that the location point A1 is the location point that the user wants to select. Therefore, the smartwatch may zoom in, based on the preset proportion, an icon corresponding to the location point A1, and may display the zoomed-in icon of the location point A1 in the central area of the display. In addition, the smartwatch may restore the location point B1 to a dot for displaying, that is, may return to a display state shown in (b) in FIG. 6.

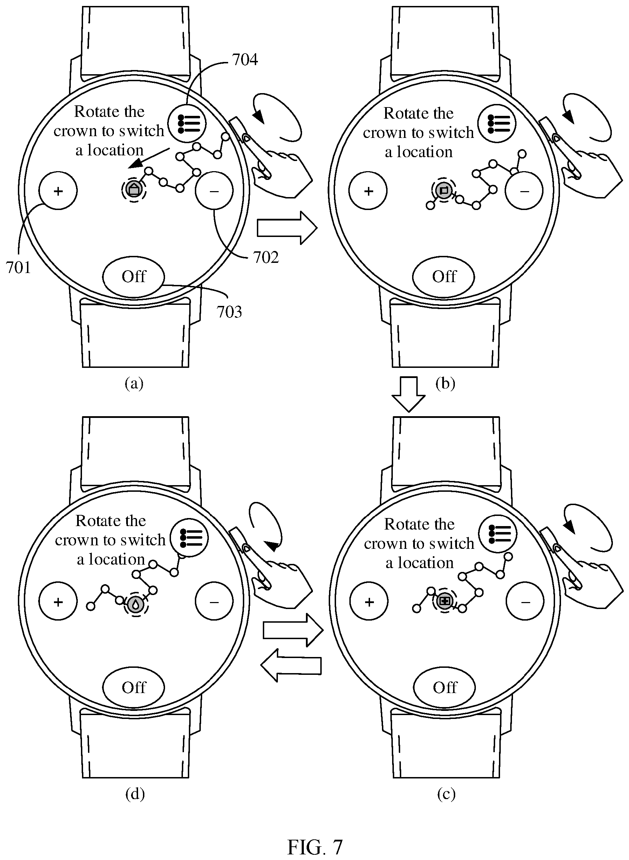

FIG. 7 is a diagram 4 of an application scenario according to an embodiment of this application. In this application scenario, an example in which the next location point of the first location point is displayed in the first display area when the crown is rotated clockwise, the previous location point of the first location point is displayed in the first display area when the crown is rotated counterclockwise, and the first display area is the central area of the display is used for description.

As shown in (a) in FIG. 7, initially, the smartwatch may determine the end point on the preset track line as the first location point by default, and may display, in the central area of the display, an icon corresponding to the end point of the preset track line (namely, an icon that is zoomed in based on the preset proportion). In addition, a "Zoom in" button 701 may be displayed in a display area on a left side of the display, a "Zoom out" button 702 may be displayed in a display area on a right side of the display, and an "Off" button 703 may be displayed in a display area on a lower side of the display, and prompt information "Rotate the crown to switch a location" and a function menu 704 are displayed in a display area on an upper side of the display. The forward direction of the preset track line is a direction shown by arrows in (a) in FIG. 7. The preset track line may sequentially include the start point, a location point A2, a location point B2, a location point C2, a location point D2, a location point E2, a location point F2, a location point G2, and the end point from the start point to the end point.

As shown in (a) in FIG. 7, when the user wants to select the location point G2, the user may rotate the crown counterclockwise. As shown in (b) in FIG. 7, when detecting the counterclockwise rotation operation on the crown, the smartwatch may determine that a previous location point of the end point is the second location point that the user wants to select, that is, may determine that the location point G2 is the location point that the user wants to select. Therefore, the smartwatch may zoom in, based on the preset proportion, an icon corresponding to the location point G2, and may display the zoomed-in icon of the location point G2 in the central area of the display. In addition, the smartwatch may restore the end point to a dot for display.

As shown in (b) in FIG. 7, when the user wants to continue to select the location point F2, the user may rotate the crown counterclockwise again. As shown in (c) in FIG. 7, when detecting the counterclockwise rotation operation on the crown, the smartwatch may determine that a previous location point of the location point G2 is the second location point that the user wants to select, that is, may determine that the location point F2 is the location point that the user wants to select. Therefore, the smartwatch may zoom in, based on the preset proportion, an icon corresponding to the location point F2, and may display the zoomed-in icon of the location point F2 in the central area of the display. In addition, the smartwatch may restore the location point G2 to a dot for display.

As shown in (c) in FIG. 7, when the user wants to continue to select the location point E2, the user may rotate the crown counterclockwise again. As shown in (d) in FIG. 7, when detecting the counterclockwise rotation operation on the crown, the smartwatch may determine that a previous location point of the location point F2 is the second location point that the user wants to select, that is, may determine that the location point E2 is the location point that the user wants to select. Therefore, the smartwatch may zoom in, based on the preset proportion, an icon corresponding to the location point E2, and may display the zoomed-in icon of the location point E2 in the central area of the display. In addition, the smartwatch may restore the location point F2 to a dot for display.

As shown in (d) in FIG. 7, when the user wants to return to the location point F2, the user may rotate the crown clockwise. When detecting the clockwise rotation operation on the crown, the smartwatch may determine that a next location point of the location point E2 is the second location point that the user wants to select, that is, may determine that the location point F2 is the location point that the user wants to select. Therefore, the smartwatch may zoom in, based on the preset proportion, an icon corresponding to the location point F2, and may display the zoomed-in icon of the location point F2 in the central area of the display. In addition, the smartwatch may restore the location point E2 to a dot for displaying, that is, return to a display state shown in (c) in FIG. 7.

In another possible implementation, after detecting the rotation operation on the crown, the smartwatch may determine a rotation direction and a rotation rate that correspond to the rotation operation, and may determine the second location point based on the rotation direction, the rotation rate, and the first location point. Then, the smartwatch may display the second location point in the first display area. The rotation direction may be a clockwise rotation direction or a counterclockwise rotation direction.

For example, the smartwatch may determine, based on the rotation rate, a quantity of location points between the second location point and the first location point. Then, the smartwatch may determine the second location point based on the rotation direction, the quantity of location points, and the first location point.

For example, when the preset track line sequentially includes the start point, a location point A, a location point B, a location point C, a location point D, a location point E, and the end point, it is assumed that the first location point is the location point C. When the quantity of location points is 0, the second location point and the first location point are adjacent location points, that is, the second location point may be the location point B or the location point D. When the quantity of location points is one, there is one location point between the second location point and the first location point, that is, the second location point may be the location point A or the location point E. When the quantity of location points is two, there are two location points between the second location point and the first location point, that is, the second location point may be the start point or the end point.

Optionally, when the second location point determined based on the rotation direction, the quantity of location points, and the first location point is not on the preset track line, the smartwatch may determine the start point or the end point of the preset track line as the second location point. For example, in a scenario in which the previous location point of the first location point is displayed in the first display area when the crown is rotated clockwise, and the next location point of the first location point is displayed in the first display area when the crown is rotated counterclockwise, when the rotation direction is the clockwise rotation direction, if the determined second location point exceeds the start point of the preset track line, the smartwatch may determine the start point of the preset track line as the second location point; or when the rotation direction is the counterclockwise rotation direction, if the determined second location point exceeds the end point of the preset track line, the smartwatch may determine the end point of the preset track line as the second location point.

For example, when the preset track line sequentially includes the start point, the location point A, the location point B, the location point C, the location point D, the location point E, and the end point, it is assumed that the first location point is the location point C. When the quantity of location points determined based on the clockwise rotation operation is three, the smartwatch may determine that there are three location points between the second location point and the location point C in a direction from the location point C to the start point, and there are only two location points between the location point C and the start point. Therefore, the smartwatch may determine the start point on the preset track as the second location point. When the quantity of location points determined based on the counterclockwise rotation operation is four, the smartwatch may determine that there are four location points between the second location point and the location point C in a direction from the location point C to the end point, and there are only two location points between the location point C and the end point. Therefore, the smartwatch may determine the end point on the preset track line as the second location point.

In an example, a correspondence (which may be referred to as a correspondence A below) between a rotation rate and a quantity of location points may be set in the smartwatch. Therefore, the smartwatch may determine the quantity of location points based on the rotation rate and the correspondence A. For example, the correspondence A may be as follows: When the rotation rate is in a first rate range, the quantity of location points is one; when the rotation rate is in a second rate range, the quantity of location points is two; and when the rotation rate is in a third rate range, the quantity of location points is three. Optionally, the first rate range may be less than the second rate range, and the second rate range may be less than the third rate range.

In another example, a correspondence (which may be referred to as a correspondence B below) between a rotation distance and a quantity of location points may be set in the smartwatch. Therefore, when detecting the rotation operation on the crown, the smartwatch may obtain a rotation rate and rotation time that correspond to the rotation operation. Then, the smartwatch may determine the rotation distance based on the rotation rate and the rotation time, and determine the quantity of location points based on the rotation distance and the correspondence B.

For example, the correspondence B may be as follows: When the rotation distance is in a first distance range, the quantity of location points is one; when the rotation distance is in a second distance range, the quantity of location points is two; and when the rotation distance is in a third distance range, the quantity of location points may be three. Optionally, the first distance range may be less than the second distance range, and the second distance range may be less than the third distance range.

It may be understood that specific values of the first rate range, the second rate range, the third rate range, the first distance range, the second distance range, the third distance range, and the like may be specifically determined by persons skilled in the art based on an actual scenario. This is not limited in embodiments of this application. In addition, setting the correspondence A, the correspondence B, and the like in the smartwatch is merely an example for explanation, and should not be construed as a limitation on embodiments of this application. In embodiments of this application, the correspondence A, the correspondence B, and the like may be stored in a cloud or another electronic device that is communicatively connected to the smartwatch, to reduce memory occupation of the smartwatch, improve performance of the smartwatch, and improve user experience.

In an example, after the second location point is selected, that is, after the second location point is displayed in the first display area, if the user wants to view location information corresponding to the second location point, the user may touch the second location point displayed on the display, for example, touch the icon corresponding to the second location point. When detecting the touch operation on the icon corresponding to the second location point, the smartwatch may display, on the display in response to the touch operation, the location information corresponding to the second location point.

In another example, after the second location point is selected, that is, after the second location point is displayed in the first display area, if the user wants to view location information corresponding to the second location point, the user may perform a second operation on the crown of the smartwatch, for example, press the crown. When detecting the press operation on the crown, the smartwatch may display, on the display in response to the press operation, the location information corresponding to the second location point. The second operation being the press operation is merely an example for explanation, and should not be construed as a limitation on embodiments of this application. For example, the second operation may be another operation such as a tap operation.

Optionally, when displaying, on the display, the location information corresponding to the second location point, the smartwatch may further display a navigation button on the display. The navigation button is used to trigger the smartwatch to navigate to the second location point. To be specific, when viewing the location information of the second location point, if the user wants to navigate to the second location point, the user may touch the navigation button on the display. When detecting the touch operation on the navigation button, the smartwatch may perform navigation based on the current location of the user and the second location point.

It should be understood that in embodiments of this application, a display area of the navigation button on the display is not limited, and may be specifically determined based on an actual situation. For example, to avoid blocking the location information corresponding to the second location point, the smartwatch may display the navigation button in the display area on the lower side of the display.

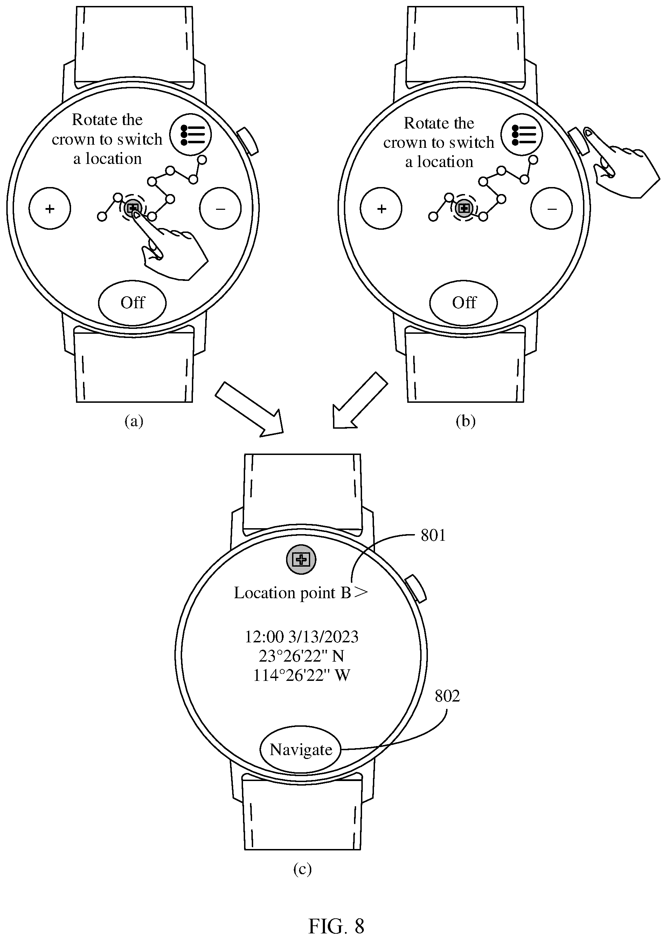

FIG. 8 is a diagram 5 of an application scenario according to an embodiment of this application.

As shown in (a) in FIG. 8, the smartwatch may display, in the first display area based on the rotation operation performed by the user on the crown, the icon corresponding to the second location point (for example, the location point B). When the user wants to view the location information corresponding to the second location point, as shown in (a) in FIG. 8, the user may directly touch the icon corresponding to the second location point, or as shown in (b) in FIG. 8, the user may press the crown of the smartwatch.

As shown in (c) in FIG. 8, when detecting the touch operation on the icon corresponding to the second location point or the press operation on the crown, the smartwatch may display, on the display, the location information corresponding to the second location point, for example, may display longitude information and latitude information corresponding to the second location point, and mark time corresponding to the second location information. In addition, because the display of the smartwatch is small, and less information can be displayed at a time, as shown in (c) in FIG. 8, the display may further display a further view button 801, and the user may view, by using the further view button 801, more detailed information corresponding to the second location point.

As shown in (c) in FIG. 8, when the location information corresponding to the second location point is displayed, the smartwatch may further display a navigation button 802 in the display area on the lower side of the display. When the user wants to navigate to the second location point, the user may touch the navigation button 802. When detecting the touch operation on the navigation button 802, the smartwatch may determine a navigation route from the current location of the user to the second location point. To be specific, the navigation route may be determined based on road information by using the current location of the user as a start point and the second location point as an end point, and navigation is performed based on the navigation route.

In a possible implementation, the smartwatch may also indicate, by using only icon display and a change of an icon size, location point selection by the user, and does not need to move the map interface, to move the location point selected by the user to the first preset area for displaying, so as to reduce processing operations of the smartwatch and improve a location point selection speed.

In other words, when the preset track line is displayed on the display, the smartwatch may zoom in the icon corresponding to the first location point on the preset track line. When detecting the rotation operation on the crown, the smartwatch may determine the second location point selected by the user, zoom in, based on the preset proportion, the icon corresponding to the second location point, and display, on the display, the icon corresponding to the second location point. In addition, the smartwatch may zoom out, based on the preset proportion, the icon corresponding to the first location point, or may not display the icon corresponding to the first location point, that is, restore the first location point to a dot for display. However, display locations of the first location point and the second location point on the display do not change.

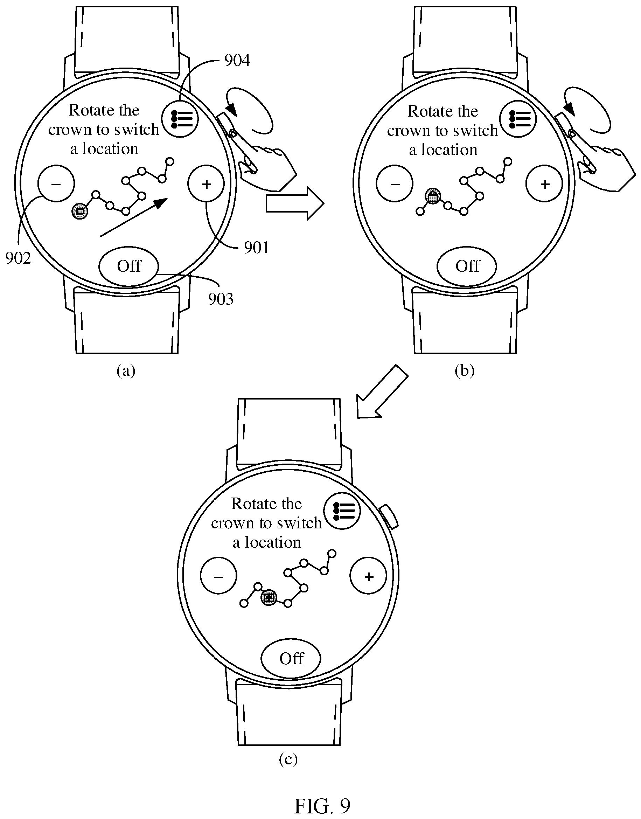

FIG. 9 is a diagram 6 of an application scenario according to an embodiment of this application. In this application scenario, an example in which the previous location point of the first location point is displayed in the first display area when the crown is rotated clockwise, and the next location point of the first location point is displayed in the first display area when the crown is rotated counterclockwise is used for description.

As shown in (a) in FIG. 9, initially, when the smartwatch displays the preset track line on the display, the smartwatch may determine the start point on the preset track line as the first location point by default, that is, the smartwatch may zoom in the icon corresponding to the start point of the preset track line, and display the zoomed-in icon at a location of the start point. In addition, the smartwatch may display a "Zoom in" button 901 in a display area on a right side of the display, display a "Zoom out" button 902 in a display area on a left side of the display, display an "Off" button 903 in a display area on a lower side of the display, and display prompt information "Rotate the crown to switch a location" and a function menu 904 in a display area on an upper side of the display. The forward direction of the preset track line is a direction shown by arrows in (a) in FIG. 9. The preset track line may sequentially include the start point, a location point A3, a location point B3, a location point C3, a location point D3, a location point E3, a location point F3, a location point G3, and the end point from the start point to the end point.

As shown in (a) in FIG. 9, when the user wants to select the location point A3, the user may rotate the crown counterclockwise. As shown in (b) in FIG. 9, when detecting the counterclockwise rotation operation on the crown, the smartwatch may determine that a next location point of the start point is the second location point that the user wants to select, that is, may determine that the location point A3 is the location point that the user wants to select. In this case, the smartwatch may zoom in, based on the preset proportion, an icon corresponding to the location point A3, and display the icon corresponding to the location point A3 at a location of the location point A3. In addition, the smartwatch may restore the start point of the preset track line to a dot for display.

As shown in (b) in FIG. 9, when the user wants to continue to select the location point B3, the user may rotate the crown counterclockwise again. As shown in (c) in FIG. 9, when detecting the counterclockwise rotation operation on the crown, the smartwatch may determine that a next location point of the location point A3 is the second location point that the user wants to select, that is, may determine that the location point B3 is the location point that the user wants to select. In this case, the smartwatch may zoom in, based on the preset proportion, an icon corresponding to the location point B3, and display the icon corresponding to the location point B3 at a location of the location point B3. In addition, the smartwatch may restore the location point A3 to a dot for display.

It should be noted that the foregoing first operation being the rotation operation is merely an example for explanation, and should not be construed as a limitation on embodiments of this application. In embodiments of this application, the first operation may alternatively be any operation like a press operation or a tap operation. In other words, the user may also select the second location point by pressing the crown of the smartwatch or tapping the crown of the smartwatch.

In an example, when the first operation is the press operation, the smartwatch may determine the second location point based on a pressing force, pressing duration, and the first location point. To be specific, when displaying the preset track line on the display, if detecting the press operation on the crown, the smartwatch may obtain the pressing force and the pressing duration that correspond to the press operation, and may determine the second location point based on the pressing force, the pressing duration, and the first location point.

Optionally, the smartwatch may determine a location relationship between the second location point and the first location point based on the pressing force. In other words, it is determined whether the second location point is a location point before the first location point or a location point behind the first location point. The front and the rear of the first location point may be determined based on the forward direction of the preset track line. The forward direction of the preset track line may be a direction from the start point to the end point.

For example, when the preset track line sequentially includes the start point, the location point A, the location point B, the location point C, the location point D, the location point E, and the end point, if the first location point is the location point B, the start point and the location point A may be location points after the first location point, and the location point C, the location point D, the location point E, and the end point may be location points before the first location point. If the first location point is the location point D, the start point, the location point A, the location point B, and the location point C may be location points after the first location point, and the location point E and the end point may be location points before the first location point.

Optionally, when the pressing force is greater than a first force, the smartwatch may determine that the second location point is the location point before the first location point. When the pressing force is less than or equal to the first force, the smartwatch may determine, in a direction, that the second location point is the location point behind the first location point. Alternatively, when the pressing force is greater than a first force, the smartwatch may determine that the second location point is the location point behind the first location point. When the pressing force is less than or equal to the first force, the smartwatch may determine, in a direction, that the second location point is the location point before the first location point. The first force may be specifically determined based on an actual situation. This is not limited in embodiments of this application.

Optionally, a correspondence (which may be referred to as a correspondence C below) between the pressing duration and the quantity of location points may be set in the smartwatch. For example, the correspondence C may be as follows: When the pressing duration is in the first duration range, the quantity of location points is one; when the pressing duration is in the second duration range, the quantity of location points is two; and when the pressing duration is in the third duration range, the quantity of location points is three. Optionally, the first duration range may be less than the second duration range, and the second duration range may be less than the third duration range.

It should be understood that specific values of the first duration range, the second duration range, the third duration range, and the like may be specifically determined based on an actual situation. This is not limited in embodiments of this application.

Therefore, when the pressing force is greater than the first force, the second location point is the location point before the first location point. When the pressing force is less than or equal to the first force, the second location point is the location point behind the first location point. When the pressing force is greater than the first force, and the pressing duration is in the first duration range, the smartwatch may determine that the second location point is the next location point of the first location point. When the pressing force is less than or equal to the first force, and the pressing duration is in the first duration range, the smartwatch may determine that the second location point is the previous location point of the first location point.

In another example, when the first operation is the tap operation, the smartwatch may determine the second location point based on a tapping speed or tapping force, a quantity of taps, and the first location point. To be specific, when detecting the tap operation on the crown, the smartwatch may obtain the tapping speed or tapping force corresponding to the tap operation, and the quantity of taps corresponding to the tap operation. Then, the smartwatch may determine the second location point based on the tapping speed or tapping force, the quantity of taps, and the first location point.

For example, the smartwatch may determine a location relationship between the second location point and the first location point based on the tapping speed or tapping force. In other words, it is determined whether the second location point is a location point before the first location point or a location point behind the first location point.

Optionally, when the tapping speed is greater than a first speed, the smartwatch may determine that the second location point is the location point before the first location point. When the tapping speed is less than or equal to the first speed, the smartwatch may determine that the second location point is the location behind the first location point. Alternatively, when the tapping speed is greater than a first speed, the smartwatch may determine that the second location point is the location behind the first location point. When the tapping speed is less than or equal to the first speed, the smartwatch may determine that the second location point is the location before the first location point. The first speed may be specifically determined based on an actual situation. This is not limited in embodiments of this application.

Similarly, when the tapping force is greater than a second force, the smartwatch may determine that the second location point is the location point before the first location point. When the tapping force is less than or equal to the second force, the smartwatch may determine that the second location point is the location point behind the first location point. Alternatively, when the tapping force is greater than a second force, the smartwatch may determine that the second location point is the location point behind the first location point. When the tapping force is less than or equal to the second force, the smartwatch may determine that the second location point is the location point before the first location point. The second force may be specifically determined based on an actual situation. This is not limited in embodiments of this application.

For example, a correspondence (which may be referred to as a correspondence D below) between the quantity of taps and the quantity of location points may be set in the smartwatch. For example, the correspondence D may be as follows: When the quantity of taps is one, the quantity of location points is one; when the quantity of taps is two, the quantity of location points is two; and when the quantity of taps is three, the quantity of location points is three.

Therefore, when the tapping speed is greater than the first speed, the second location point is the location before the first location point. When the tapping speed is less than or equal to the first speed, the second location point is the location point behind the first location point. When the tapping speed is greater than the first speed and the quantity of taps is one, the smartwatch may determine that the second location point is the next location point of the first location point. When the tapping speed is less than or equal to the first force, and the quantity of taps is one, the smartwatch may determine that the second location point is the previous location point of the first location point.

Similarly, when the tapping force is greater than the second force, the second location point is the location point before the first location point. When the tapping force is less than or equal to the second force, the second location point is the location point behind the first location point. When the tapping force is greater than the second force and the quantity of taps is one, the smartwatch may determine that the second location point is the next location point of the first location point. When the tapping force is less than or equal to the second force, and the quantity of taps is one, the smartwatch may determine that the second location point is the previous location point of the first location point.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Corresponding to the location selection method described in the foregoing embodiments, an embodiment of this application further provides a location selection apparatus. Modules of the apparatus may correspondingly implement the steps of the location selection method.

It should be noted that, content such as information exchange and execution processes between the foregoing apparatuses/units are based on a same concept as those in the method embodiments of this application. For specific functions and brought technical effects of the foregoing apparatuses/units, refer to the method embodiments. Details are not described herein again.

Persons skilled in the art may clearly understand that, for the purpose of convenient and brief description, division into the foregoing functional units or modules is merely used as an example for description. During actual application, the foregoing functions may be allocated to different functional units or modules for implementation based on a requirement. That is, an inner structure of the apparatus is divided into different functional units or modules to implement all or some of the functions described above. Functional units or modules in embodiments may be integrated into one processing unit, or each of the units may exist alone physically, or two or more units may be integrated into one unit. The integrated unit may be implemented in a form of hardware, or may be implemented in a form of software functional unit. In addition, specific names of the functional units or modules are merely for ease of distinguishing between the functional units or modules, but are not intended to limit the protection scope of this application. For a specific working process of the units or modules in the foregoing system, refer to a corresponding process in the method embodiments. Details are not described herein again.

An embodiment of this application further provides an electronic device. The electronic device includes at least one memory, at least one processor, and a computer program that is stored in the at least one memory and that is able to be run on the at least one processor. When the processor executes the computer program, the electronic device is enabled to implement the steps in any one of the foregoing location selection method embodiments. For example, a structure of the electronic device may be shown in FIG. 1.

An embodiment of this application further provides a computer-readable storage medium. The computer-readable storage medium stores a computer program. When the computer program is executed by a computer, the computer is enabled to implement the steps in any one of the foregoing location selection method embodiments.

An embodiment of this application provides a computer program product. When the computer program product is run on an electronic device, the electronic device is enabled to implement the steps in any one of the foregoing location selection method embodiments.

When an integrated unit is implemented in the form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file, an intermediate form, or the like. The computer-readable storage medium may include at least any entity or apparatus that can carry the computer program code to an apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk. In some jurisdictions, the computer-readable storage medium cannot be an electrical carrier signal or a telecommunication signal according to legislation and patent practices.

In the foregoing embodiments, descriptions of embodiments have respective focuses. For a part that is not described in detail or recorded in an embodiment, refer to related descriptions in other embodiments.

Persons of ordinary skill in the art may be aware that, in combination with the examples described in embodiments disclosed in this specification, units and algorithm steps may be implemented by electronic hardware or a combination of computer software and electronic hardware. Whether the functions are performed in a hardware or software manner depends on particular applications and design constraint conditions of the technical solutions. Persons skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one location, or may be distributed on a plurality of network units. Some or all of the units may be selected based on actual requirements to achieve the objectives of the solutions of embodiments.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A location selection method, applied to an electronic device, wherein a rotatable component and a display are disposed in the electronic device, and the method comprises:
displaying, by the electronic device, a first location point in a first display area of the display, wherein the first location point is a location point on a preset track line, and the preset track line comprises at least two location points;
detecting, by the electronic device, a first operation on the rotatable component; and
displaying, by the electronic device, a second location point in the first display area in response to the first operation, wherein the second location point is a location point on the preset track line, and the second location point and the first location point are different location points.

2. The method according to claim 1, wherein the first operation is a rotation operation.

3. The method according to claim 2, wherein the displaying, by the electronic device, the second location point in the first display area in response to the first operation comprises:
determining, by the electronic device, a rotation direction corresponding to the first operation;
determining, by the electronic device, the second location point based on the rotation direction and the first location point; and
displaying, by the electronic device, the second location point in the first display area.

4. The method according to claim 3, wherein the determining, by the electronic device, the second location point based on the rotation direction and the first location point comprises:
when the rotation direction is a first direction, determining, by the electronic device, that a previous location point of the first location point on the preset track line is the second location point; or
when the rotation direction is a second direction, determining, by the electronic device, that a next location point of the first location point on the preset track line is the second location point, wherein
the previous location point and the next location point of the first location point are determined based on a forward direction of the preset track line.

5. The method according to claim 4, wherein the first direction is a clockwise rotation direction, and the second direction is a counterclockwise rotation direction; or the first direction is a counterclockwise rotation direction, and the second direction is a clockwise rotation direction.

6. The method according to claim 2, wherein the displaying, by the electronic device, the second location point in the first display area in response to the first operation comprises:
determining, by the electronic device, a rotation direction and a rotation rate that correspond to the first operation;
determining, by the electronic device, the second location point based on the rotation direction, the rotation rate, and the first location point; and
displaying, by the electronic device, the second location point in the first display area.

7. The method according to claim 6, wherein the determining, by the electronic device, the second location point based on the rotation direction, the rotation rate, and the first location point comprises:
determining, by the electronic device based on the rotation rate, a quantity of location points between the first location point and the second location point; and
determining, by the electronic device, the second location point based on the rotation direction, the quantity of location points, and the first location point.

8. The method according to any one of claims 1 to 7, wherein the method further comprises:
detecting, by the electronic device, a touch operation on the second location point; and
displaying, by the electronic device on the display in response to the touch operation, location information corresponding to the second location point.

9. The method according to any one of claims 1 to 7, wherein the method further comprises:
detecting, by the electronic device, a second operation on the rotatable component; and
displaying, by the electronic device on the display in response to the second operation, location information corresponding to the second location point.

10. The method according to claim 9, wherein the second operation is an operation of pressing the rotatable component.

11. The method according to any one of claims 1 to 10, wherein the electronic device is a smartwatch.

12. The method according to claim 11, wherein the rotatable component is a crown of the smartwatch.

13. The method according to any one of claims 1 to 12, wherein the first display area is a central area of the display.

14. The method according to any one of claims 1 to 13, wherein the displaying, by the electronic device, the second location point in the first display area comprises:
displaying, by the electronic device in the first display area, an icon corresponding to the second location point.

15. The method according to claim 14, wherein the displaying, by the electronic device in the first display area, the icon corresponding to the second location point comprises:
zooming in, by the electronic device based on a preset proportion, the icon corresponding to the second location point, and displaying the zoomed-in icon in the first display area.

16. An electronic device, comprising a memory, a processor, and a computer program that is stored in the memory and that is able to be run on the processor, wherein when the processor executes the computer program, the electronic device is enabled to implement the location selection method according to any one of claims 1 to 15.

17. A computer-readable storage medium, wherein the computer-readable storage medium stores a computer program, and when the computer program is executed by a computer, the computer is enabled to implement the location selection method according to any one of claims 1 to 15.

18. A computer program product, wherein when the computer program product is run on an electronic device, the electronic device is enabled to perform the location selection method according to any one of claims 1 to 15.
